# EUROPEAN PATENT SPECIFICATION

(11) **EP 1 647 332 B1**
(45) Date of publication and mention of the grant of the patent: **21.11.2007**
(21) Application number: 05109410.0
(22) Date of filing: 11.10.2005
(51) Int. Cl.: B03B 9/06, H01J 9/52

(54) **Process for the recovery of raw materials following the demolition of kinescopes and recovered products thus obtained**
Verfahren zum Gewinnen von Rohstoff nach dem Zerschlagen von Bildröhren und die so gewonnenen Produkte
Procédé de récupération de matière brute après démolition de tubes cathodiques, et produits ainsi récupérés

(30) Priority: 12.10.2004 IT VI20040240; 04.02.2005 IT VI20050033
(43) Date of publication of application: 19.04.2006
(73) Proprietor: Cora', Marco Enrico, 36078 Valdagno (Vicenza) (IT)
(72) Inventor: Cora', Marco Enrico, 36078 Valdagno (Vicenza) (IT)
(74) Representative: De Gregori, Antonella

(56) References cited:
- EP-A- 1 475 153
- DE-A1- 4 314 013
- DE-A1- 19 900 184
- US-A- 5 316 510

## Description

The present invention refers to a process for the recovery of raw materials following the demolition of kinescopes. A process of this type is disclosed in US-A-5316510. The scope of the invention extends analogously to the recovered products thus obtained, which, wash in the described way, can be recycled and reused as components of illumination apparatuses (screens) or else for purely ornamental purposes (such as decorative items).

The kinescope of television sets, computers, etc. mainly consists of a glass cone, having a capsule of ferrous material inside it.

The front surface of the kinescope (screen) is made from crystal and it is coated with a layer of small phosphor particles, which, during operation of the kinescope, are hit by the electron beam, suitably directed and deflected, to obtained a selective illumination of the various portions of the screen.

The particular manufacture of the kinescope causes substantial problems of disposal and recycling of raw materials, since it is difficult to separate the materials of which it is made, necessary for the collection and reuse thereof, both technically and from an environmental point of view.

Moreover, it has not yet been possible to obtain a substantial recovery of raw materials, following the treatment of old kinescopes.

The coming into force of Italian legislative decree no. 22/97 has made the environmental problem concerning the disposal of old electrical and electronic apparatuses, such as kinescopes, even clearer since, even if treated through suitable treatment processes in order to obtain the maximum recovery of raw materials, such recovery does not achieve significant percentages compared to the overall amount of waste treated following such treatment.

The remaining fraction of unrecoverable waste must therefore be sent, in an uncontrolled way, to definitive disposal in a dump, with the relative consequences linked to the methods of transportation, to the overall bulk and, last but not least, to the costs to be borne for disposal in the dump.

Therefore, it is clear from what has been said above that there is an increasingly important need to carry out a progressive and constant reduction of the unrecoverable fraction of waste, to be sent to the dump, deriving from the treatment of old kinescopes.

The purpose of the present invention, therefore, is that of avoiding the aforementioned drawbacks and, in particular, that of indicating a process for the recovery of raw materials following the demolition of kinescopes, which allows the unrecoverable fraction of waste, to be sent to the dump, to be progressively reduced.

Another purpose of the present invention is that of indicating a process for the recovery of raw materials following the demolition of kinescopes, which is extremely reliable and that allows a clear saving of the recycling and storage costs, as well as a substantial reduction in the bulk of waste obtained following the demolition process of the kinescope, to be obtained.

Another purpose of the present invention is that of indicating a process for the recovery of raw materials, which ensures complete safety for the worker during all of the division and purging steps.

A further purpose of the present invention is that of obtaining a recovered product, following the demolition of kinescopes, which can be reused in various uses, in order to increasingly limit environmental problems.

The last but not least purpose of the invention is that of obtaining a recovered product, following the demolition of kinescopes, which is easy and cost-effective to make and easy and simple to use.

These and other purposes are accomplished by a process for the recovery of raw materials, following the demolition of kinescopes, according to claim 1, and by the recovered product thus obtained, according to claim 10, to which we refer for the sake of brevity; other detailed characteristics of the process and of the recovered products are shown in the subsequent claims.

Further purposes and advantages of the present invention shall become clear from the following description, relative to a preferred but not limiting example embodiment of the process for the recovery of raw materials, following the demolition of kinescopes, and of the recovered products thus obtained.

The separation of the various materials that make up the kinescopes, in order to obtain the maximum recovery of raw materials from them, takes place according to treatment processes that can foresee manual or else automated operations.

For example, the separation of iron, which constitutes the outer frame of the screen of kinescopes, from the crystal of the screen and from the glass of the cone can be carried out by hand, through a fixed circular saw and/or through a laser cutting operation, or else by means of magnetic systems.

Similarly, the brushing of the phosphor powders can be carried out manually, through suitable instruments, in order to obtain optimal sizes of the components for their remelting; regarding this, further fragmentation and sorting operations of the removed and divided material are necessary.

As an alternative to the manual mechanical brushing operation of the phosphor powders present on the surface layer of the screen of a kinescope, it is also possible to carry out the cleaning by means of chemical components, capable of removing the layer of phosphor from the glass panel and separating the powders from the resinous matrix that acts as glue during the chemical reaction; it is clear that in this case it is necessary to pay due attention to the further recovery of the chemical substances used.

The treatment process can furthermore be carried out in an automatic or automated way, by means of specific machines, suitable for carrying out the demolition of the kinescope and the simultaneous cleaning of the glass from the phosphor particles.

In such a case, the kinescope to be demolished is inserted inside the machine, through a suitable opening, so that a suitable turnover mechanism, comprising a press, allows the kinescope to be pressed for its complete demolition.

In particular, the pressing takes place in such a way as to ensure a controlled demolition of the glass of the kinescope and, moreover, in the pressing step, in order to hook the frame of ferrous material of the kinescope, a loading and guide piston is used, which is moved in a way and with a force such as to perforate the mask of the kinescope.

Moreover, the machine comprises an automatic brushing system of the layer of phosphor present on the front surface of the glass of the kinescope, a collection and transportation device (guide or conveyor belt on rollers) of the glass, which comes away by falling, and a suction device of the phosphor powder that has detached from the glass of the kinescope during the brushing and pressing step.

According to the present invention, in output from the demolition machine of kinescopes, i.e. following the manual cutting and brushing operations of the screen, it is possible to first of all carry out a manual selection of the fragments (being of various shapes and sizes) of crystal of the screen of the kinescope, which are separated from the fragments of glass of the cone of the aforementioned kinescope, so that the glassy material in general (fragments of crystal of the screen + fragments of glass of the cone), which is normally treated as unrecoverable waste, can thus be reused, in order to obtain the maximum recovery from them.

Indeed, such fragments are transported automatically or manually inside one or more washing machines and made to roll inside a basket or other containment element, rotating in a single direction or, alternatively, in one direction and in the opposite direction; in particular, the fragments of glassy material can be positioned inside a machine, such as a washing machine and/or an agitator body (or tumbler), the containment element of which is basket shaped, contains a suitable amount of water where the fragments are immersed and rotates in one direction and/or in the opposite direction.

In alternative embodiments, the fragments can be transported, automatically or manually, inside one or more agitator body or containment tumbler, the inner basket of which rotates in a single direction or else in one direction and in the opposite direction, for predetermined times.

Each tumbler can be kept in depression and made to work dry, in order to obtain fragments of glass and/or crystal suitably shaped and smoothed.

In such a case, the definitive shape of such fragments is obtained by abrasion of the glassy material, which continues to roll inside the basket of the tumbler, in one direction and/or in the opposite direction, followed by a suction step of the powders and of other portions of material detached from each fragment following the movement of the aforementioned basket.

It has also been noted, from experimental tests, that the best results were obtained by using a washing machine, the basket of which rotates, in the presence of water at a variable temperature between 30 and 70 °C, in a single direction, or else by using a agitator body or tumbler, working dry, the basket of which rotates, in the presence of water at room temperature, for a certain period of time, in one direction and, for another determined period of time, in the opposite direction.

In the case in which a washing machine is used, it is also possible to add one or more dying substance to the washing water of the fragments of glassy material, in order to obtain a coloured surface finish.

The containment element of the fragments (basket of the washing machine or basket of the tumbler) is finally equipped with a series of holes, of suitable sizes, suitable, during movement and through the help of a pump, for discharging the powders and the small pieces of crystal and/or glass that form due to the continuous collisions of the fragments against the walls of the basket of the washing machine or of the tumbler.

In such a way, fragments of crystal and/or glass, of various shapes and sizes and possibly coloured on the surface, are obtained, which are suitably smoothed, rounded and/or beaten, following the treatment described above.

The fragments can, finally, be picked up, after the discharge of the powders, and sent to an automated final collection and transportation plant.

It is thus possible to obtain the maximum recovery of such fragments, since, thus treated, they can be advantageously used both as screens of generic light sources and as decorative elements for vases, fountains, aquaria and for the fancy goods industry in general.

From the description that has been made the characteristics of the process for the recovery of raw materials following the demolition of kinescopes and of the recovered products thus obtained, which are the object of the present invention, are clear, just as their advantages are also clear.

It is clear that numerous other variants can be brought to the recovery process and to the products without departing from the scope of the appended claims.

## Claims

1. Process for the realization of decorative elements following the demolition of kinescope, comprising:
- a first picking step of the ferrous material contained in the kinescope;
- a second mechanical removal step of the layer of phosphor deposited on the front surface of the screen of the kinescope;
- a third demolition step of the glassy material of which the kinescope consists, whereby,
after the demolition operation of the glassy material, the following further steps are foreseen:
- a transportation and depositing step of the portions of glassy material into at least one rotary containment element;
- a moving step of said at least one containment element, in order to suitably smooth said portions of glassy material;
- a picking step from the containment element of powders and small waste fragments of glassy material, which are produced by abrasion during the movement of the containment element;
- a removal step of said portions of glassy material which constitute said finished decorative elements.

2. Process according to claim 1 **characterized in that** said at least one rotary containment element is housed in one or more washing machines, in which washing liquid is made to flow at a predetermined temperature.

3. Process according to claim 1 **characterized in that**, after the demolition operation of the glassy material, it foresees a selection step, from amongst said glassy material, of the portions of crystal of the screen of the kinescope, which are separated from the portions of glass of the cone of the kinescope.

4. Process according to claim 1 **characterized in that** said at least one containment element is inserted inside at least one agitator body or tumbler, suitable for working dry and/or in depression.

5. Process according to claim 2 **characterized in that** it foresees a step of addition of one or more drying substances to said washing liquid of said machine.

6. Process according to claim 1 **characterized in that** said at least one containment element rotates in one direction or, alternatively and for the determined periods of time, in one direction and in the opposite direction.

7. Process according to claim 1 **characterized in that** said picking step of powders and small waste fragments of glassy material is carried out through a suction process, through at least one pump.

8. Process according to claim 1 **characterized in that**, following the suction step of portions of glassy material, which constitute said finished decorative elements, it foresees a loading step of the finished decorative elements into automation and transportation plants.

9. Decorative element **characterized in that** it comprises one or more smoothed, rounded and/or beaten portions made of glassy material resulting from the demolition of kinescopes according to the process of claim 1.

## Patentansprüche

1. Verfahren zur Realisierung dekorativer Elemente im Anschluss an die Zerschlagung einer Bildröhre, das umfasst:
- einen ersten Aufnahmeschritt des in der Bildröhre enthaltenen Eisenmaterials;
- einen zweiten mechanischen Entfernungsschritt der Phosphorschicht, die auf der vorderen Oberfläche des Schirms der Bildröhre abgeschieden ist;
- einen dritten Zerschlagungsschritt des Glasmaterials, aus dem die Bildröhre besteht, wobei
nach dem Zerschlagungsarbeitsgang des Glasmaterials die folgenden weiteren Schritte vorgesehen sind:
- ein Transport- und Ablagerungsschritt der Anteile von Glasmaterial in zumindest ein rotierendes Behälterelement;
- ein Bewegungsschritt des zumindest einen Behälterelements, um die Anteile von Glasmaterial geeignet zu glätten;
- ein Aufnahmeschritt aus dem Behälterelement von Pulvern und kleinen Abfallfragmenten von Glasmaterial, die während der Bewegung des Behälterelements durch Abrieb erzeugt werden;
- ein Entfernungsschritt der Anteile von Glasmaterial, die die fertig gestellten dekorativen Elemente bilden.

2. Verfahren nach Anspruch 1,
**dadurch gekennzeichnet, dass**
das zumindest eine rotierende Behälterelement in einer oder mehreren Waschmaschinen untergebracht ist, in denen bewirkt wird, dass Waschflüssigkeit mit einer vorbestimmten Temperatur strömt.

3. Verfahren nach Anspruch 1,
**dadurch gekennzeichnet, dass**
nach dem Zerschlagungsarbeitsgang des Glasmaterials ein Auswahlschritt unter dem Glasmaterial von den Kristallanteilen des Schirms der Bildröhre vorgesehen ist, die von den Glasanteilen des Konus der Bildröhre getrennt werden.

4. Verfahren nach Anspruch 1,
**dadurch gekennzeichnet, dass**
das zumindest eine Behälterelement in das Innere zumindest eines Rührkörpers oder Tumblers eingesetzt wird, der für eine trockene Arbeit und/oder eine Arbeit unter Unterdruck geeignet ist.

5. Verfahren nach Anspruch 2,
**dadurch gekennzeichnet, dass**
es einen Hinzufügungsschritt von einer oder mehreren Trocknungssubstanzen zu der Waschflüssigkeit der Maschine voersieht.

6. Verfahren nach Anspruch 1,
**dadurch gekennzeichnet, dass**
das zumindest eine Behälterelement in einer Richtung oder alternativ und für die bestimmten Zeitdauern in einer Richtung und der entgegengesetzten Richtung rotiert.

7. Verfahren nach Anspruch 1,
**dadurch gekennzeichnet, dass**
der Aufnahmeschritt von Pulvern und kleinen Abfallfragmenten von Glasmaterial durch ein Ansaugverfahren durch zumindest eine Pumpe durchgeführt wird.

8. Verfahren nach Anspruch 1,
**dadurch gekennzeichnet, dass**
im Anschluss an den Ansaugschritt von Anteilen von Glasmaterial, die die fertig gestellten dekorativen Elemente bilden, ein Beladeschritt der fertig gestellten dekorativen Elemente in Automations- und Transportanlagen vorgesehen ist.

9. Dekoratives Element,
**dadurch gekennzeichnet, dass**
es einen oder mehrere geglättete, gerundete und/oder gemahlene/abgeschlagene Abschnitte umfasst, die aus Glasmaterial hergestellt sind, das aus der Zerschlagung von Bildröhren gemäß dem Verfahren von Anspruch 1 resultiert.

## Revendications

1. Procédé de fabrication d'éléments décoratifs à la suite de la démolition d'un cinéscope, comprenant :
- une première étape consistant à ramasser le matériau ferreux contenu dans le cinéscope ;
- une deuxième étape consistant à retirer mécaniquement la couche de phosphore déposée sur la surface avant de l'écran du cinéscope ;
- une troisième étape consistant à démolir le matériau vitreux qui compose le cinéscope, moyennant quoi
après l'opération de démolition du matériau vitreux, on prévoit en outre les étapes suivantes :
- une étape consistant à transporter et déposer les portions du matériau vitreux dans au moins un élément de confinement rotatif;
- une étape consistant à déplacer ledit au moins un élément de confinement, afin de lisser de manière appropriée lesdites portions de matériau vitreux;
- une étape consistant à ramasser depuis l'élément de confinement des poudres et des petits fragments de résidu de matériau vitreux, qui sont produits par abrasion au cours du déplacement de l'élément de confinement;
- une étape consistant à retirer lesdites portions du matériau vitreux qui constituent lesdits éléments décoratifs finis.

2. Procédé selon la revendication 1, **caractérisé en ce que** ledit au moins un élément de confinement rotatif est logé dans une ou plusieurs machines à laver, dans lesquelles on fait s'écouler un liquide de lavage à une température prédéterminée.

3. Procédé selon la revendication 1, **caractérisé en ce que**, après l'opération de démolition du matériau vitreux, on prévoit une étape consistant à sélectionner, parmi ledit matériau vitreux, les portions de cristal de l'écran du cinéscope, qui sont séparées des portions de verre du cône du cinéscope.

4. Procédé selon la revendication 1, **caractérisé en ce que** ledit au moins un élément de confinement est inséré à l'intérieur d'au moins un corps d'agitateur ou tambour, approprié pour fonctionner à sec et/ou à basse pression.

5. Procédé selon la revendication 2, **caractérisé en ce qu'**il prévoit une étape consistant à ajouter une ou plusieurs substances dessicatives audit liquide de lavage de ladite machine.

6. Procédé selon la revendication 1, **caractérisé en ce que** ledit au moins un élément de confinement effectue une rotation dans une direction ou, en variante, et pour les périodes de temps déterminées, dans une direction et dans la direction opposée.

7. Procédé selon la revendication 1, **caractérisé en ce que** ladite étape consistant à ramasser des poudres et des petits fragments de résidus de matériau vitreux est exécutée par l'intermédiaire d'un procédé d'aspiration, par l'intermédiaire d'au moins une pompe.

8. Procédé selon la revendication 1, **caractérisé en ce que**, à la suite de l'étape d'aspiration des portions de matériau vitreux, qui constituent lesdits éléments décoratifs finis, on prévoit une étape consistant à charger les éléments décoratifs finis dans des équipements d'automatisation et de transport.

9. Elément décoratif **caractérisé en ce qu'**il comprend une ou plusieurs parties lissées, arrondies et/ou martelées fabriquées à partir de matériau vitreux résultant de la démolition de cinéscopes selon le procédé de la revendication 1.
